# FASCICULE DE BREVET EUROPEEN

(11) **EP 2 508 367 B1**
(45) Date de publication et mention de la délivrance du brevet: **01.07.2015**
(21) Numéro de dépôt: 12305363.9
(22) Date de dépôt: 29.03.2012
(51) Int. Cl.: B60D 1/14, B60D 1/48

(54) **Ensemble constitué par une traverse d'attelage et deux longerons**
Einheit bestehend aus einem Querträger einer Anhängekupplung und zwei Längsträgern
Assembly formed by a transverse tow beam and two side-members

(30) Priorité: 06.04.2011 FR 1152958
(43) Date de publication de la demande: 10.10.2012
(73) Titulaire: Renault S.A.S., 92100 Boulogne-Billancourt (FR)
(72) Inventeur: Renault, Nicolas, 78310 COIGNIERES (FR)

(56) Documents cités:
- EP-A2- 2 277 722
- CA-A1- 2 494 032
- NL-C1- 1 029 987
- US-A1- 2006 186 637
- US-A1- 2010 171 285

## Description

L'invention se rapporte à un ensemble constitué par une traverse d'attelage, deux longerons et le dispositif de liaison permettant de relier ces éléments entre eux. Les longerons sont deux pièces parallèles entre elles, et la traverse d'attelage joint ces deux longerons en étant perpendiculaire à eux. A titre de rappel, un longeron est une pièce de renfort longitudinale et placée sous le plancher d'un véhicule, et la traverse d'attelage est une barre transversale, dotée d'un moyen d'accrochage permettant d'arrimer une remorque à l'arrière du véhicule. Or, une liaison mécanique entre des pièces perpendiculaires, est toujours délicate à réaliser, dans la mesure où elle induit de fortes contraintes, liées à cet agencement particulier des pièces entre elles et à une certaine dispersion de leur positionnement. L'invention se rapporte donc à un ensemble comprenant un dispositif de liaison entre la traverse d'attelage et les deux longerons, permettant un montage optimisé de ces trois éléments, limitant les contraintes mécaniques.

Pour la suite de la description le terme « traverse » signifie « traverse d'attelage ».

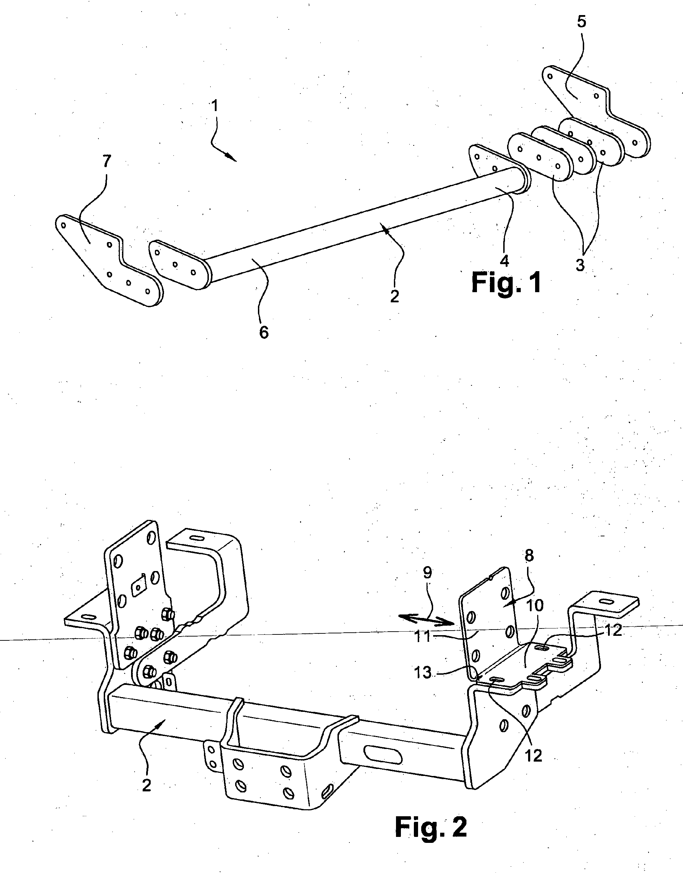

Les dispositifs de liaison entre une traverse d'attelage et des longerons existent déjà, et mettent en oeuvre des moyens permettant de minimiser les contraintes sur les longerons lors du serrage de la traverse. En se référant à la figure 1, qui est une vue éclatée d'une traverse d'attelage et d'un dispositif de liaison mis en oeuvre dans un premier mode de réalisation d'un ensemble 1 selon l'état de la technique, le dispositif de liaison met en oeuvre des moyens de liaison sous la forme d'une série de cales 3 intercalées entre une extrémité latérale 4 de la traverse 2 et un bras de liaison 5 avec le longeron correspondant. Pour cette configuration, le procédé de montage consiste d'abord à fixer une extrémité de la traverse 6 à un premier longeron par l'intermédiaire d'un premier bras 7 de liaison, puis à intercaler un nombre de cales 3 suffisant, entre l'autre extrémité 4 de la traverse 2 et le deuxième bras 5 de liaison destiné à être fixé à un deuxième longeron, pour compenser un éventuel jeu. Une fois que ledit jeu a été rattrapé, le deuxième bras 5 est fixé rigidement au deuxième longeron. Cette première méthode de montage présente un certain nombre d'inconvénients :
- Un monteur peut tout simplement oublier d'insérer les cales 3, car aucun signe ou aucune indication ne vient rappeler cette opération,
- Le temps de montage desdites cales 3 et leur ajustement précis, ne sont pas compatibles avec les cadences élevées de montage en usine,
- La multiplication des interfaces de contact induites par la mise en place des cales 3, est une source de dégradation de la qualité des serrages entre la traverse 2, les bras 5,7 de liaison et les longerons.

En se référant à la figure 2, qui est une vue en perspective d'une traverse et d'un dispositif de liaison mis en oeuvre dans un deuxième mode de réalisation d'un ensemble selon l'état de la technique, une autre méthode de montage consiste à supprimer les cales 3 précédentes, et à les remplacer par une pièce 8 en équerre, dont la position est réglable transversalement comme l'indique la flèche 9. Une première face 10 de cette pièce 8 est destinée à être solidarisée à la traverse 2, et une deuxième face 11 perpendiculaire est destinée à être reliée au longeron. La première face 10 se retrouve en position horizontale et possède deux trous oblongs 12, dont les axes longitudinaux sont parallèles entre eux et sont parallèles à un axe longitudinal de la traverse 2. De cette manière, la position de la pièce 8 en équerre peut être ajustée transversalement pour s'adapter à l'écartement précis entre les deux longerons. Cette méthode présente également des inconvénients :
- La fixation de la pièce 8 en équerre exige deux orientations de serrage, l'une horizontale et l'autre verticale, pour assurer un montage sans contraintes,
- Le monteur peut ne pas respecter l'ordre de serrage préconisé,
- La reprise d'effort n'est pas uniforme de par et d'autre de la zone charnière 13 de la pièce 8 en équerre.

Les dispositifs de liaison selon l'invention, permettant de relier une traverse aux deux longerons d'un véhicule, sont ajustables pour tenir compte de certains jeux au montage, mais en s'affranchissant des inconvénients précités.

L'invention se rapporte à un ensemble constitué par une traverse d'attelage telle que divulguée dans EP2277722 A2 qui montre le préambule de la revendication 1 et deux longerons, la traverse étant reliée auxdits longerons par un dispositif de liaison comprenant deux bras d'interface permettant de relier chaque extrémité de la traverse, à un longeron. La principale caractéristique d'un ensemble selon l'invention selon revendication 1 est que chaque bras vient directement au contact d'un longeron et de la traverse, au moins un bras ayant une position ajustable par rapport à ladite traverse. De cette manière, le dispositif de liaison entre la traverse et les longerons est simplifié, sans avoir recours à l'ajout de pièces rapportées, telles que des cales d'ajustement ou des équerres à positionnement variables, évitant ainsi tous les inconvénients liés à ces configurations plus complexes. Il est important que le dispositif de liaison entre la traverse d'attelage et les deux longerons soit ajustable, pour pouvoir rattraper les dispersions d'assemblage des longerons et de la traverse d'attelage.

Selon l'invention, au moins un bras possède une liaison articulée avec la traverse. Par ce biais, la position ajustable du bras avec la traverse s'effectue par rotation, qui demeure le moyen de déplacement le plus compact et donc le moins encombrant, par rapport à un déplacement par translation, nécessitant un environnement dégagé suivant la direction de cette translation. Au moment du montage, le bras articulé subira une rotation d'angle réduit, préférentiellement inférieur à 10° à partir d'une position référence pour laquelle ledit bras est en parfaite continuité avec la traverse, pour ajuster sa position dans le but de réaliser une liaison satisfaisante avec le longeron correspondant. Une liaison satisfaisante est une liaison pour laquelle le contact du bras avec le longeron est optimisé, pour pouvoir réduire les contraintes au moment du montage. Souvent, il arrive que les parois du longeron soient légèrement inclinées par rapport à une position vigoureusement verticale, et un bras pivotant Permet de s'adapter à la dépouille dudit longeron sans la création d'un pliage supplémentaire sur le bras.

Avantageusement, chaque bras possède une liaison articulée avec la traverse. Il s'agit de la configuration la moins encombrante et la plus souple, puisque chacun desdits bras peut participer indépendamment l'un de l'autre, au rattrapage des dispersions. La précision du montage d'un ensemble selon l'invention, au moyen de deux bras articulés, s'en trouve accrue.

De façon préférentielle, chaque bras articulé est fixé rigidement au longeron correspondant. En effet, le montage de la traverse sur les longerons doit être rigide et non flottant. L'articulation du bras d'interface est en effet prévue pour un ajustement de position le plus précis possible dudit bras, permettant de s'adapter à la position et à la géométrie du longeron.

Selon l'invention, chaque bras articulé peut pivoter autour d'un axe horizontal et parallèle à un axe longitudinal des longerons, ledit axe étant porté par ladite traverse. Autrement dit, chaque bras pivotant est bloqué transversalement par son axe de rotation, et ne peut donc subir aucun mouvement en translation le long de l'axe longitudinal de la traverse. Le rattrapage de jeu pour permettre d'optimiser les conditions de contact entre le bras et le longeron va s'effectuer par un simple pivotement de faible amplitude du bras.

Préférentiellement, chaque bras articulé possède une paroi plane destinée à venir se fixer rigidement à une paroi plane du longeron correspondant, le positionnement du bras par rotation étant ajusté pour que la surface de contact entre les deux parois soit la plus étendue possible. Il est supposé que la paroi du bras destinée à venir au contact d'une paroi du longeron est fixe sur le bras, la rotation dudit bras permettant aux parois planes du bras et du longeron de venir l'une contre l'autre, en maximisant leur surface de contact. En effet, la face plane du bras est dotée d'un trou destiné à venir se placer en face d'un trou correspondant du longeron, afin d'assurer la liaison entre les deux éléments par une vis de fixation. Il est donc fondamental de réaliser un positionnement optimisé des deux surfaces, afin d'assurer cette continuité parfaite entre les trous.

Avantageusement, la face plane du bras est dotée d'une série de trous alignés. Cette série de trous permet d'accroître la souplesse de montage entre la traverse et le longeron, en positionnant au plus juste ledit bras par rapport audit longeron, sans avoir à créer la moindre contrainte sur l'un des deux éléments. De même, le même bras pourrait être utilisé pour réaliser des ensembles selon l'invention, avec une pluralité de longerons de géométries et de dimensions différentes.

De façon préférentielle, chaque bras articulé prolonge transversalement la traverse. Pour cette configuration, quelle que soit la position du bras sur la traverse, il déborde latéralement de la traverse.

Selon un deuxième mode de réalisation préféré d'un ensemble selon l'invention, au moins un bras, dont la position est ajustable, possède au moins une ouverture oblongue pour permettre la fixation dudit bras sur la traverse avec une certaine tolérance le long de ladite traverse. Pour cette configuration, le bras peut, soit être positionné de façon rigide sur la traverse en ayant une certaine tolérance le long de ladite traverse, soit être rotatif autour de la traverse et posséder également une certaine souplesse de positionnement le long de cette traverse.

Avantageusement, chaque bras dont la position est ajustable, est constitué de deux pièces distinctes et solidarisées l'une à l'autre, chacune desdites pièces étant également fixée par vissage à la traverse en étant placée de par et d'autre de ladite traverse. Les deux pièces peuvent par exemple être solidarisées l'une à l'autre par des boulons. De cette manière, le vissage des deux pièces constitutives de chaque bras ajustable sur la traverse, permet une fixation optimisée dudit bras sur la traverse.

Un ensemble selon l'invention présente l'avantage de mettre en oeuvre un dispositif de liaison entre la traverse et les longerons, qui est performant puisqu'il ne génère aucune contrainte, qui est ajustable puisqu' il peut tolérer des approximations de finition de la traverse ou des longerons, qui est facile à mettre en oeuvre en faisant intervenir des liaisons simples et déjà éprouvées, et qui demeure d'un encombrement constant par rapport au dispositif de liaison existants. Le dispositif de liaison mis en oeuvre dans un ensemble selon l'invention, a également l'avantage d'être compatible avec les cadences élevées de montage en usine, en pouvant rapidement être mis en oeuvre. Enfin, les différentes pièces impliquées dans un ensemble selon l'invention sont constituées par des tôles découpées, puis pliées, dont l'assemblage est réalisé sans soudures, lesdites pièces étant donc faciles à usiner et donc peu onéreuses.

On donne ci-après, une description détaillée d'un mode de réalisation préféré d'un ensemble selon l'invention, en se référant aux figures 1 à 4.
- La figure 1 est une vue éclatée d'une traverse et d'un dispositif de liaison mis en oeuvre dans un premier mode de réalisation d'un ensemble selon l'état de la technique,
- La figure 2 est une vue en perspective d'une traverse et d'un dispositif de liaison mis en oeuvre dans un deuxième mode de réalisation d'un ensemble selon l'état de la technique,
- La figure 3a est une vue en perspective d'une traverse et d'un dispositif de liaison d'un premier mode de réalisation préféré d'un ensemble selon l'invention,
- La figure 3b est une vue de devant de la traverse et du dispositif de liaison de la figure 3a,
- La figure 4 est une vue en perspective d'une traverse et d'un dispositif de liaison d'un deuxième mode de réalisation préféré d'un ensemble selon l'invention,

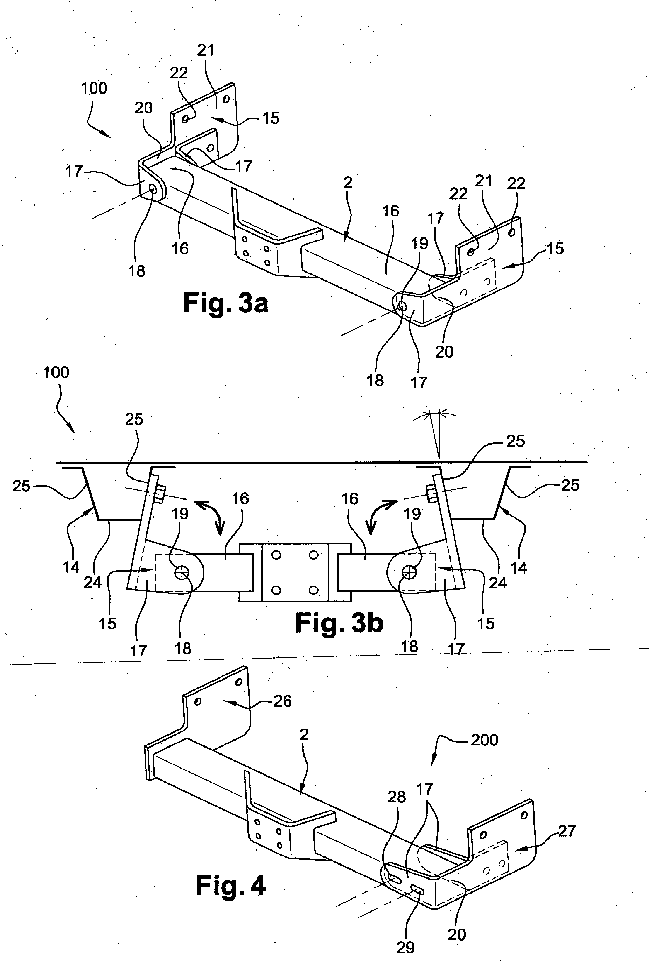

Les figures 1 et 2 ont déjà été décrites. En se référant aux figures 3a et 3b, pour lesquelles les éléments communs avec les figures 1 et 2 conservent les mêmes références, un premier mode 100 de réalisation d'un ensemble selon l'invention, comprend une traverse 2, deux longerons 14 et un dispositif de liaison comportant deux bras 15 articulés, symétriques et situés chacun à une extrémité 16 de la traverse 2. Plus précisément chaque bras articulé 15 présentent deux parois parallèles 17 en saillie et percée chacune d'un trou 18, les deux trous 18 étant alignés suivant un axe perpendiculaire à ces deux parois 17, et étant prévus pour laisser passer un axe de rotation 19 dudit bras 15. Les deux parois 17 parallèles en saillie sont reliées entre elles par une paroi 20 de liaison perpendiculaire, ladite paroi de liaison 20 étant prolongée par une paroi principale 21, de plus grandes dimensions, la paroi de liaison 20 et la paroi principale 21 étant en continuité l'une de l'autre dans un même plan. La paroi principale 21 de chaque bras articulé 15 est percée de plusieurs trous 22, et est destinée à venir au contact d'une paroi du longeron 14 correspondant. Chaque bras 15 est réalisé en deux pièces, vissées l'une à l'autre, chacune desdites pièces comportant l'une des deux parois 17 en saillie destinée à être traversée par l'axe de rotation 19 du bras 15. L'écartement entre les deux parois 17 en saillie de chaque bras 15 est supérieur à la largeur de la traverse 2, qui est sa dimension prise suivant un axe parallèle à un axe longitudinal d'un longeron 14. De cette manière, les deux parois 17 en saillie de chaque bras 15 enserrent une extrémité de la traverse 2, de façon à ce que les trous 18 de chacune desdites parois 17 soient alignés sur des trous pratiqués dans chacune des extrémités de ladite traverse 2. Chaque axe 19 de rotation de chaque bras 15 passe ainsi à travers les deux parois 17 en saillie de chacun desdits bras 15, ainsi qu'à travers chaque extrémité de la traverse 2. Les dimensions de chaque bras 15 et le positionnement de chaque axe 19 de rotation sur la traverse 2 sont tels, que la paroi de liaison 20 de chaque bras 15 peut pivoter autour de chaque extrémité de la traverse 2. De cette manière, chaque bras 15 contribue à accroître la longueur totale de la traverse 3. En se référant à la figure 3b, un longeron 14 est une pièce allongée, qui s'étend selon une direction perpendiculaire à un axe longitudinal de la traverse 2, et qui possède une section en forme de U. Plus précisément, cette section a la forme d'un U évasé, présentant un segment de liaison horizontal 24, reliant deux segments 25 s'écartant progressivement l'un de l'autre en s'éloignant dudit segment 24 de liaison, lesdits trois segments 24,25 matérialisant les trois parois délimitant le longeron 14. Chaque paroi latérale 25 du longeron 14 fait environ un angle de 3° avec un plan vertical. De cette manière, la traverse 2 munie à chacune de ses deux extrémités d'un bras articulé 15, est positionnée perpendiculairement entre les deux longerons 14. Chaque bras 15 subit alors une rotation appropriée pour permettre à sa paroi principale 21 de venir au contact de l'une des deux parois inclinée 25 du longeron 14 correspondant. Cette mise au contact s'effectue de façon rigoureuse et précise, au niveau d'une zone d'extrémité de la paroi inclinée du longeron 14, pour permettre aux trous 22 de la paroi principale 21 de chaque bras 15 de venir se superposer à des trous pratiqués dans ladite zone de la paroi inclinée 25 du longeron 14. Une fois cette correspondance assurée, des vis de fixation passent à travers ces trous 22 en continuité, pour fixer définitivement et de façon rigide, la traverse 2 aux deux longerons 14.

En se référant à la figure 4, un deuxième mode 200 de réalisation préféré d'un ensemble selon l'invention, comprend une traverse 2, deux longerons et un dispositif de liaison comportant deux bras 26,27. Le premier bras 26 est conventionnel et vient se fixer de façon rigide à une première extrémité de la traverse 2, ledit bras 26 étant solidarisé à un premier longeron. Le deuxième bras 27 possède globalement la même géométrie que celle des deux bras pivotants 15 du premier mode de réalisation, en étant notamment constitué de deux pièces fixées l'une à l'autre par boulonnage. La différence essentielle entre le bras pivotant 15 du premier mode de réalisation et ce deuxième bras 27, est que le deuxième bras n'est pas articulé, et que chacune des deux parois 17 en saillie de ce deuxième bras 27 est percée de deux trous 28,29 oblongs alignés selon une direction longitudinale desdites parois 17 en saillie, chaque trou 28,29 d'une paroi en saillie 17 étant aligné sur un trou 28,29 de l'autre paroi en saillie 17 suivant un axe perpendiculaire aux plans de ces parois 17. De cette manière, le deuxième bras 27 possède une certaine tolérance de fixation le long de la traverse 2, grâce à la forme allongée des deux trous 28,29. La traverse 2 est d'abord fixée au premier longeron par l'intermédiaire de son premier bras 26. Ensuite, en fonction de la position du deuxième longeron, le deuxième bras 27 est fixé à la traverse 2 de façon la plus adaptée, grâce aux deux trous 28,29 oblongs , pour assurer, dans les meilleures conditions, la liaison avec ledit deuxième longeron. De façon plus précise, l'extrémité de la traverse 2 sur laquelle est destinée à venir se fixer le deuxième bras 27 est percée de deux trous en regard l'un de l'autre. Ainsi, ledit deuxième bras 27 va plus ou moins émerger de l'extrémité de la traverse 2, la position finale de ce deuxième bras 27 étant arrêtée, lorsque sa paroi principale 21 viendra idéalement se placer contre la paroi correspondante 25 du longeron 14.

## Revendications

1. Ensemble (100,200) constitué par une traverse d'attelage (2) et deux longerons (14), ladite traverse (2) étant relié audits longerons (14) par un dispositif de liaison comprenant deux bras (15,26,27) d'interface permettant de relier chaque extrémité (16) de la traverse (2) à un longeron (14), chaque bras (15,26,27) venant directement au contact d'un longeron (14) et de la traverse (2), au moins un bras (15,27) ayant une position ajustable par rapport à ladite traverse (2) et au moins un bras (15) possédant une liaison articulée avec la traverse (2), **caractérisé en ce que** chaque bras articulé (15) peut pivoter autour d'un axe horizontal (19) et parallèle à un axe longitudinal des longerons (14), et **en ce que** ledit axe (19) est porté par ladite traverse (2).

2. Ensemble selon la revendication 1, **caractérisé en ce que** chaque bras (15) possède une liaison articulée avec la traverse (2).

3. Ensemble selon l'une quelconque des revendications 1 ou 2, **caractérisé en ce que** chaque bras articulé (15) est fixé rigidement au longeron correspondant (14).

4. Ensemble selon l'une quelconque des revendications 1 à 3, **caractérisé en ce que** chaque bras articulé (15) possède une paroi plane (21) destinée à venir se fixer rigidement à une paroi plane (25) du longeron (14) correspondant, et **en ce que** le positionnement du bras (15) par rotation est ajusté pour que la surface de contact entre les deux parois (21,25) soit la plus étendue possible.

5. Ensemble selon la revendication 4, **caractérisé en ce que** la face plane du bras (21) est dotée d'une série de trous (22) alignés.

6. Ensemble selon l'une quelconque des revendications 1 ou 5, **caractérisé en ce que** chaque bras articulé (15) prolonge transversalement la traverse (2).

7. Ensemble (200) selon la revendication 1 **caractérisé en ce qu'**au moins un bras (27), dont la position est ajustable, possède au moins une ouverture oblongue (28,29) pour permettre la fixation du bras (27) sur la traverse (2) avec une certaine tolérance le long de ladite traverse (2).

8. Ensemble selon l'une quelconque des revendications précédentes, **caractérisé en ce que** chaque bras (15, 27), dont la position est ajustable, est constitué de deux pièces distinctes et solidarisées l'une à l'autre, chacune desdites pièces étant également fixée par vissage à la traverse (2) en étant placée de par et d'autre de ladite traverse (2).

## Patentansprüche

1. Einheit (100, 200), bestehend aus einem Querträger (2) einer Anhängekupplung und zwei Längsträgern (14), wobei der Querträger (2) mit den Längsträgern (14) durch eine Verbindungsvorrichtung verbunden ist, umfassend zwei Verbindungsarme (15, 26, 27), die es ermöglichen, jedes Ende (16) des Querträgers (2) mit einem Längsträger (14) zu verbinden, wobei jeder Arm (15, 26, 27) direkt mit einem Längsträger (14) und dem Querträger (2) in Kontakt kommt, wobei mindestens ein Arm (15, 27) eine in Bezug zum Querträger (2) einstellbare Position hat, und wobei mindestens ein Arm (15) eine Gelenkverbindung mit dem Querträger (2) besitzt, **dadurch gekennzeichnet, dass** jeder Gelenkarm (15) um eine Horizontalachse (19) parallel zu einer Längsachse der Längsträger (14) schwenken kann, und dass die Achse (19) von dem Querträger (2) getragen wird.

2. Einheit nach Anspruch 1, **dadurch gekennzeichnet, dass** jeder Arm (15) eine Gelenkverbindung mit dem Querträger (2) besitzt.

3. Einheit nach einem der Ansprüche 1 oder 2, **dadurch gekennzeichnet, dass** jeder Gelenkarm (15) starr am entsprechenden Längsträger (14) befestigt ist.

4. Einheit nach einem der Ansprüche 1 bis 3, **dadurch gekennzeichnet, dass** jeder Gelenkarm (15) eine flache Wand (21) besitzt, die dazu bestimmt ist, sich starr an einer flachen Wand (25) des entsprechenden Längsträgers (14) zu befestigen, und dass die Positionierung des Arms (15) durch Drehung derart eingestellt ist, dass die Kontaktfläche zwischen den beiden Wänden (21, 25) möglichst groß ist.

5. Einheit nach Anspruch 4, **dadurch gekennzeichnet, dass** die flache Seite des Arms (21) mit einer Reihe von ausgerichteten Löchern (22) versehen ist.

6. Einheit nach einem der Ansprüche 1 oder 5, **dadurch gekennzeichnet, dass** jeder Gelenkarm (15) den Querträger (2) quer verlängert.

7. Einheit (200) nach Anspruch 1, **dadurch gekennzeichnet, dass** mindestens ein Arm (27), dessen Position einstellbar ist, mindestens eine längliche Öffnung (28, 29) besitzt, um die Befestigung des Arms (27) auf dem Querträger (2) mit einer gewissen Toleranz entlang des Querträgers (2) zu ermöglichen.

8. Einheit nach einem der vorhergehenden Ansprüche, **dadurch gekennzeichnet, dass** jeder Arm (15, 27), dessen Position einstellbar ist, von zwei unterschiedlichen und miteinander verbundenen Teilen gebildet ist, wobei jeder der Teile auch durch Schrauben an dem Querträger (2) befestigt ist, wobei er beiderseits des Querträgers (2) angeordnet ist.

## Claims

1. An assembly (100,200) comprising a coupling crossmember (2) and two longitudinal members (14), said crossmember (2) being connected to said longitudinal members (14) by a connecting device comprising two interface arms (15,26,27) for connecting each end (16) of the crossmember (2) to a longitudinal member (14), each arm (15,26,27) coming directly into contact with a longitudinal member (14) and the crossmember (2), at least one arm (15,27) having an adjustable position relative to said crossmember (2) and at least one arm (15) having an articulated connection to the crossmember (2), **characterized in that** that each articulated arm (15) is pivotable about a horizontal shaft (19) parallel to a longitudinal axis of the longitudinal members (14) and **in that** said shaft (19) is carried by said crossmember (2).

2. An assembly according to claim 1, **characterized in that** each arm (15) has an articulated connection to the crossmember (2).

3. An assembly according to either one of claims 1 or 2, **characterized in that** each articulated arm (15) is rigidly fixed to the corresponding longitudinal member (14).

4. An assembly according to any one of claims 1 to 3, **characterized in that** each articulated arm (15) has a flat wall (21) intended to be fixed rigidly to a flat wall (25) of the corresponding longitudinal member (14) and **in that** the positioning of the arm (15) by rotation is adjusted so that the contact area between the two walls (21,25) is as large as possible.

5. An assembly according to claim 4, **characterized in that** the flat face of the arm (21) includes a series of aligned holes (22).

6. An assembly according to either one of claims 1 or 5, **characterized in that** each articulated arm (15) extends the crossmember (2) transversely.

7. An assembly (200) according to claim 1 **characterized in that** at least one arm (27), whose position is adjustable, has at least one oblong opening (28,29) for fixing the arm (27) to the crossmember (2) with some tolerance along said crossmember (2).

8. An assembly according to any one of the preceding claims, **characterized in that** each arm (15, 27), whose position is adjustable, consists of two separate parts fixed to each other, said parts also being fixed by screwing to the crossmember (2) and positioned on either side of said crossmember (2).
